Europäisches Patentamt

**European Patent Office**

**Office européen des brevets**

(11) Publication number: **0 233 157**
A2

# (12) EUROPEAN PATENT APPLICATION

(21) Application number: **87830009.4**

(22) Date of filing: **13.01.87**

(51) Int. Cl.⁴: **F 02 M 25/02**

(30) Priority: **13.01.86 IT 4752386**

(71) Applicant: **ITAL IDEE s.r.l., Via dell'Elettronica, 16, I-00144 Roma (IT)**

(43) Date of publication of application: **19.08.87 Bulletin 87/34**

(72) Inventor: **Cantoni, Angelo, Via Vitaliano Brancati 51, I-00144 Rome (IT)**

(84) Designated Contracting States: **AT BE CH DE ES FR GB GR LI LU NL SE**

(74) Representative: **Cavattoni, Fabio et al, Cavattoni & Raimondi Viale dei Parioli, 160, I-00197 Roma (IT)**

(54) **Apparatus for recovering water from internal combustion engine exhaust gas and feeding it into the fuel.**

㊸ The apparatus for recovering water from internal combustion engine exhaust gas and feeding it in emulsified form into the fuel according to the invention comprises an auxiliary pipe (6) branching from the engine main exhaust pipe (4) and leading into a surface condenser member (5) possessing an outlet pipe (7) which returns to the main exhaust pipe (4), the surface condenser member (5) being provided with a condensed water collection reservoir (27) in its interior, said reservoir (27) being provided with a pipe (8) connected to a mixer member (10) disposed in the engine fuel feed line (11).

Apparatus for recovering water from internal combustion engine exhaust
gas and feeding it in emulsified form into the fuel

This invention relates to an apparatus for recovering water from internal combustion engine exhaust gas and feeding it in emulsified form into the fuel, in order to improve the fuel efficiency.

It is well known that adding a certain quantity of water in dispersed form into the fuel of internal combustion engines increases the engine efficiency, resulting in improved combustion and considerably reducing the quantity of pollutant substances present in the exhaust gas.

However, existing water-fuel emulsifying methods require the vehicle to be provided with an auxiliary water tank which has to be filled periodically, thus adding to the normal refuelling operations.

On the other hand, the exhaust gas from internal combustion engines is rich in water in the vapor state, this constituting one of the main hydrocarbon combustion products. The object of the present invention is therefore to provide an apparatus which enables part of the water present in the exhaust gas, which is at high temperature and at a pressure exceeding atmospheric by virtue of the presence of the silencer at the end of the exhaust pipe, to be recovered, stored and fed in the liquid state to a mixer member which mixes it with the fuel under optimum conditions.

These results are attained according to the present invention by an apparatus for recovering water from internal combustion engine exhaust gas and feeding it in emulsified form into the fuel, comprising an auxiliary pipe branching from the engine main exhaust pipe and leading into a surface condenser member possessing an outlet pipe which returns to the main exhaust pipe, the surface condenser member being provided with a condensed water collection reservoir in its interior, said

2

reservoir being provided with a pipe which connects it to a mixer member.

In particular, the condenser member consists of an externally finned coil opening into a multi-tubular element, at the end of which there is provided a collection chamber from which the return pipe leads to the engine exhaust pipe, the condensed water collection reservoir being provided at the base of said collection chamber.

The return pipe to the engine exhaust pipe opens downstream of the secondary pipe into a zone in which the exhaust gas flows under reduced pressure. In particular, it opens conveniently into the exhaust pipe in a constriction connected by converging and diverging pipe pieces to the adjacent portions of the exhaust pipe.

The condenser member is conveniently disposed in a naturally ventilated zone of the engine compartment, and can also be provided with a cooling fan.

The return pipe to the exhaust pipe can conveniently be provided with a pump should the vacuum induced by the constriction in the exhaust pipe not be sufficient to cause passage of a sufficient gas throughput through the condenser member.

In the collection chamber there is conveniently provided a periodically replaceable filter arranged to retain those solid particles present in the exhaust gas which are removed by the condensed water.

The condensed water collection reservoir is provided with a float valve which shuts off the connection pipe to the fuel mixer member when there is no water in the reservoir.

The condensed water collection reservoir is also provided with a pipe branching from the position of the maximum allowable level in it and opening into the throat of a venturi tube disposed in the return pipe to the main exhaust pipe in order to keep the maximum level of liquid present in it constant.

The coil can also comprise bimetallic Peltier-effect cooling elements fed by thermoelectric elements disposed on the exhaust pipe.

The connection pipe to the mixer member comprises a pump arranged to feed water from the collection reservoir to the mixer member at a pressure less than the fuel feed pressure.

In non-supercharged engines, the mixer member consists of an atomiser nozzle disposed in the air-fuel mixture feed pipe to the engine, downstream of the carburettor.

In the case of injection engines, the mixer member consists of a venturi tube disposed in the fuel feed pipe, and into the throat of which there opens a feed nozzle for the water originating from the collection reservoir of the condenser member.

Further, in injection engines the mixer member comprises a static emulsifier disposed in the fuel feed line to the injector.

In order to allow the apparatus to be balanced, means for adjusting the maximum fuel feed pressure to the mixer member are provided. A non-return valve is provided in the water feed pipe to the mixer member in order to prevent fuel returning to the water.

Further details will be apparent from the description given hereinafter with reference to the accompanying drawings in which:

Figure 1 is a general scheme of an internal combustion engine provided

4

with the apparatus according to the invention,

Figure 2 shows the condensation device, and

Figure 3 is a detailed view of the device for metering and atomising water into the fuel of an injection engine.

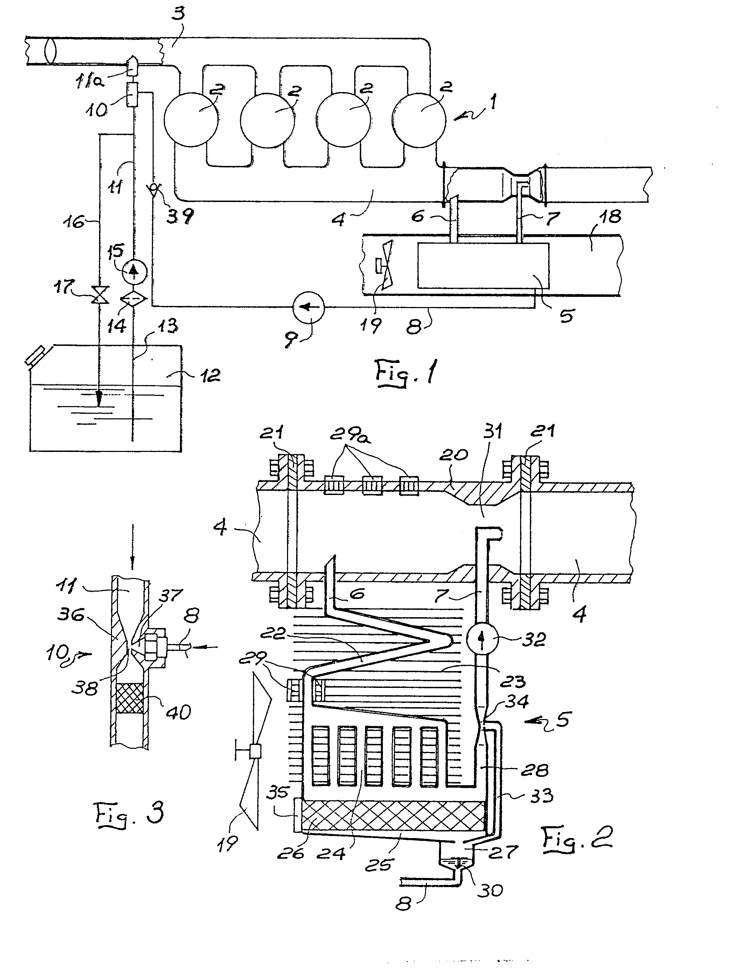

In particular, Figure 1 shows an engine 1 provided with cylinders 2 to which fuel and air are fed through a feed manifold 3. The engine 1 discharges its burnt exhaust gas through the exhaust pipe 4.

The exhaust pipe 4 is connected to a condenser member 5 by an inlet pipe 6 and return pipe 7. The condenser member 5 separates the water contained in the exhaust gas and feeds it through the pipe 8, by way of a pump 9, to an emulsifier apparatus 10 disposed in the line 11 through which fuel is fed to the feed manifold 3, into which it is fed by way of an injector member 11a in the case of injection engines.

The fuel is withdrawn from a tank 12 through the dip tube 13 and filter 14, and is fed by the pump 15. The return line 16 to the tank 12 is provided with a valve 17 for adjusting the fuel feed pressure.

The condenser member 5 is inserted into a duct 18 provided with a cooling fan 19, or alternatively is disposed in a ventilated zone of the vehicle, to ensure its effective cooling.

It is shown in detail in Figure 2. The inlet pipe 6 and return pipe 7 are inserted into a portion 20 of the exhaust pipe 4, which is connected to the remaining portions of this latter by way of gaskets 21.

The inlet pipe 6 forms a coil 22 provided with fins 23 to increase its heat transfer, and then extends into an also finned multi-tubular unit 24 which opens into a manifold 25 after passing through a filter 26. The condensed water collection reservoir 27 is provided below the manifold 25, and the pipe 28 is connected to the return pipe 7 in order to feed uncondensed gas back into the exhaust pipe 4.

A number of bimetallic Peltier-effect elements 29 fed by thermoelectric elements 29a disposed on the walls of the portion 20 traversed by the high-temperature exhaust gas can conveniently be provided on the walls of the coil 22 to contribute to the cooling of the gas flowing through the coil 22.

The high-temperature exhaust gas withdrawn from the pipe 6 thus undergoes substantially cooling which causes the water contained therein to condense and accumulate in the collection reservoir 27 from which it is withdrawn in order to be emulsified with the fuel.

The collection reservoir 27 is provided with a float valve 30 arranged to shut-off passage in the case of lack of water in the reservoir, in order to prevent exhaust gas flowing in such a case to the engine feed fuel.

The return pipe 7 is inserted into the portion 20 of the exhaust pipe 4 in correspondence with a constriction 31 forming a venturi tube which provides a vacuum for drawing the gas through the condenser member. Should this vacuum be insufficient to ensure circulation of the required throughput, a pump 32 is provided in the pipe 7.

In order to prevent the formation of excess water in the reservoir 27, a pipe 33 branches from the maximum allowable level position in the reservoir 27 and is inserted into the throat of a venturi tube 34 formed in the pipe 28, to thus ensure that this excess water is drawn off.

The filter 26, which retains any solid particles present in the exhaust gas which have been removed with the condensed water, can be conveniently of the disposable type, and can be extracted and replaced through an access aperture 35.

The exhaust gas flowing under pressure through the exhaust pipe 4 and containing a large percentage of water in the vapor state is thus deviated into the coil 22 of the condenser member 5, in which it is cooled until the contained water condenses and is collected in the reservoir 27. From here the water can be withdrawn by the pump 9 and fed to the emulsifier 10 to be added to the fuel. The mixer member 10, which is required to form a fine water dispersion in the fuel, is shown by way of example in Figure 3.

It comprises a venturi tube 36 in which the fuel, fed through the pipe 11 in the direction of the arrow, undergoes during its passage a pressure drop which draws the water through the atomiser nozzle 37.

The pressure of the fuel fed by the pump 15 is kept greater than the water pressure in the pipe 8.

If the injector 11a is closed, there is no fuel flow through the venturi tube 36 and consequently no vacuum is formed in its throat 38. The fuel feed pressure, which is higher than the water pressure in the pipe 8, then prevents water entering, while a non-return valve 39 prevents fuel flow into the water feed pipe 8.

Downstream of the venturi tube 36 there is a static emulsifier 40, which enables the liquids to be completely emulsified before they are fed into the injector 11a.

In the case of non-supercharged engines, the mixer member, not shown in the figure, consists of a metering and atomising nozzle disposed in the air-fuel mixture feed pipe to the engine downstream of the carburettor, and the water throughput through said metering and atomising nozzle is governed by the vacuum in the feed.

As the exhaust gas pressure depends on the engine rotation speed, as does the pressure (or vacuum in the case of non-supercharged engines) of the fuel feed, the apparatus produces water for emulsification in a constant quantity with respect to requirements, without needing large-volume water storage or buffer tanks.

The condenser member 5 can be fixed rigidly to the body of the engine by way of thermoinsulating elements, or if the exhaust pipe is fixed non-rigidly to the engine block the condenser member can be fixed autonomously to a fixed element of the vehicle and connected to the engine exhaust pipe by flexible hoses.

As the engine exhaust gas is very corrosive, both due to the high temperature and to the formation of acid solutions as the temperature reduces, the pipes of the apparatus are constructed of corrosion-resistant materials. In particular, the pipes 6, 7, exposed to high-temperature gas, are constructed of stainless steel alloy, whereas the other parts, operating at low temperature, are constructed of plastics material.

Claims:

1. An apparatus for recovering water from internal combustion engine exhaust gas and feeding it in emulsified form into the fuel, characterised by comprising an auxiliary pipe (6) branching from the engine main exhaust pipe (4) and leading into a surface condenser member (5) possessing an outlet pipe (7) which returns to the main exhaust pipe (4), the surface condenser member (5) being provided with a condensed water collection reservoir (27) in its interior, said reservoir (27) being provided with a pipe (8) which connects it to a mixer member (10) disposed in the fuel feed line (11) to the engine.

2. An apparatus according to claim 1, characterised in that the condenser member (5) consists of an externally finned coil (22) opening into a multi-tubular element (24), at the end of which there is provided a collection chamber (25) from which the return pipe (7) leads to the engine exhaust pipe (4), the condensed water collection reservoir (27) being provided at the base of said collection chamber (25).

3. An apparatus according to claim 1, characterised in that the return pipe (7) to the engine exhaust pipe (4) opens downstream of the secondary pipe into a zone in which the exhaust gas flows under reduced pressure.

4. An apparatus according to claim 3, characterised in that the return pipe (7) opens into the exhaust pipe (4) in a constriction (31) connected by converging and diverging pipe pieces to the adjacent portions of the exhaust pipe (4).

5. An apparatus according to claim 2, characterised in that the condenser member (5) is disposed in a naturally ventilated zone of the engine compartment.

6. An apparatus according to claim 2, characterised in that the condenser member (5) is provided with a cooling fan (19).

7. An apparatus according to claim 2, characterised in that the return pipe (7) to the exhaust pipe (4) is provided with a pump (32).

8. An apparatus according to claim 2, characterised in that a periodically replaceable filter (26) is provided in the collection chamber (25).

9. An apparatus according to claim 2, characterised in that the condensed water collection reservoir (27) is provided with a float valve (30) which shuts off the connection pipe (8) to the fuel mixer member (10) when there is no water in the reservoir (27).

10. An apparatus according to claim 2, characterised in that the condensed water collection reservoir (27) is provided with a pipe (33) branching from the position of the maximum allowable level in it and opening into the throat of a venturi tube (34) disposed in the return pipe (28) to the main exhaust pipe (4).

11. An apparatus according to claim 2, characterised in that the coil (22) comprises bimetallic Peltier-effect cooling elements (29) fed by thermoelectric elements (29a) disposed on the exhaust pipe (4).

12. An apparatus according to claim 1, characterised in that the connection pipe (8) to the mixer member (10) comprises a pump (9) arranged to feed water from the collection reservoir (27) to the mixer member (10) at a pressure less than the fuel feed pressure.

13. An apparatus according to claim 1, characterised in that in non-supercharged engines, the mixer member consists of a metering and atomising nozzle disposed in the air-fuel mixture feed pipe to the

0233157

10

engine, downstream of the carburettor.

14. An apparatus according to claim 1, characterised in that in injection engines, the mixer member (10) consists of a venturi tube (36) disposed in the fuel feed pipe (11), and into the throat (38) of which there opens a feed nozzle (37) for the water originating from the collection reservoir (27) of the condenser member (5).

15. An apparatus according to claim 14, characterised in that in injection engines the mixer member (10) comprises a static emulsifier (40) disposed in the fuel feed line (11) to the injector (11a).

16. An apparatus according to claim 1, characterised in that means are provided for adjusting the maximum fuel feed pressure to the mixer member (10).

17. An apparatus according to claim 1, characterised in that a non-return valve (39) is provided in the water feed pipe (8) to the mixer member (10).

Fig. 1

Fig. 3

Fig. 2